Europäisches Patentamt

**European Patent Office**

**Office européen des brevets**

(11) Numéro de publication: **0 220 972 B1**

## FASCICULE DE BREVET EUROPEEN

(45) Date de publication de fascicule du brevet: **26.02.92** (51) Int. Cl.⁵: **G01N 5/04,** G05D 23/20

(21) Numéro de dépôt: **86402024.3**

(22) Date de dépôt: **16.09.86**

(54) **Procédé et appareil de dessication contrôlée d'une masse d'un échantillon de tabac.**

(30) Priorité: **20.09.85 FR 8513967**

(43) Date de publication de la demande:
**06.05.87 Bulletin 87/19**

(45) Mention de la délivrance du brevet:
**26.02.92 Bulletin 92/09**

(84) Etats contractants désignés:
**AT BE CH DE FR GB IT LI LU NL SE**

(56) Documents cités:
**DE-A- 2 028 909
FR-A- 2 275 767**

**PATENTS ABSTRACTS OF JAPAN, vol. 7, no.
290 (P-245)[1435], page 29 P 245, 24 décembre 1983; & JP-A-58 162 839 (KETSUTO KA-
GAKU KENKYUSHO K.K.) 27-09-1983**

(73) Titulaire: **SOCIETE NATIONALE D'EXPLOITA-
TION INDUSTRIELLE DES TABACS ET ALLU-
METTES
53, quai d'Orsay
F-75340 Paris Cedex 07(FR)**

(72) Inventeur: **Prigent, Daniel
29, rue des Aydes
F-45000 Orléans (Loiret)(FR)**

(74) Mandataire: **Bloch, Gérard et al
2, square de l'Avenue du Bois
F-75116 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a tout d'abord pour objet un procédé de dessication contrôlée d'une masse d'un échantillon de tabac, en vue de la mesure de sa teneur en eau, dans lequel on commande un flux d'air chaud, auquel on soumet ladite masse de tabac, de telle façon que la température de l'air, après passage dans la masse de tabac, soit égale à une valeur déterminée au bout d'un temps déterminé.

Un tel procédé est utilisé pour mesurer, par pesage de la masse de tabac avant et après dessication, la teneur en eau de l'échantillon.

On connaît déjà un tel procédé, décrit par exemple dans le brevet français N° 769 498, dans la norme NF V 37-004 et dans la demande française FR-A-2 275 767. Dans ce procédé, le flux d'air chaud doit être commandé pour que la température de l'air, après passage dans la masse de tabac, soit de 100°C au bout de 5 minutes, et le régime de chauffe doit rester invariable pendant la dessication de la masse de tabac.

Dans la mise en oeuvre de ce procédé, le flux d'air chaud est obtenu à partir d'un ventilateur produisant un flux d'air à température ambiante auquel on transfère de l'énergie calorifique à l'aide d'une résistance chauffante parcourue par un courant. On commande le flux d'air chaud en faisant varier le débit du ventilateur, ou le courant qui parcourt la résistance. Comme le régime de chauffe doit rester invariable pendant la dessication d'une masse de tabac en essai, on procède par tâtonnement, avant l'essai réel, pour régler le débit du ventilateur et le courant qui parcourt la résistance au cours d'essais préparatoires, afin que la température de l'air, après passage dans la masse de tabac, soit de 100°C au bout de 5 minutes. Etant donné que, pour un flux d'air chaud déterminé, et au bout d'un temps déterminé, la température atteinte par l'air après passage dans une masse de tabac dépend de la valeur de cette masse, on est conduit à utiliser, dans les essais préparatoires comme dans les essais réels, des masses de tabac de valeur déterminée, à savoir 10 grammes.

Malgré cela, on ne peut être certain d'obtenir une température de 100°C au bout de 5 minutes au cours de chaque essai, même si le régime de chauffe a été correctement établi, en raison de l'influence de divers paramètres non totalement maitrisés, comme par exemple la nature du tabac.

On tolère donc, pratiquement, que l'air atteigne, au bout de 5 minutes, une température comprise entre 90°C et 110°C. Toutefois, dès que la température atteinte est en dehors de la plage s'étendant de 99°C à 101°C, il est nécessaire de procéder à une correction sur la valeur mesurée de la teneur en eau. La valeur de la correction à effectuer, qui dépend de la température effectivement atteinte, est donnée dans un tableau établi empiriquement et qui dépend lui-même du type, blond ou brun, de tabac en essai.

Dès que la température atteinte sort de la plage s'étendant de 90°C à 110°C parce que les conditions de mesure, comme par exemple la température ambiante, ont progressivement changé, ou parce que l'on change d'échantillon de tabac, en passant par exemple d'un tabac blond à un tabac brun, ou d'un tabac humide à un tabac sec, il faut recommencer la série d'essais préparatoires et le tâtonnement, afin de retoucher le débit du ventilateur, ou le courant qui parcourt la résistance, pour obtenir un flux d'air chaud tel que la température atteinte par l'air après passage dans la masse de tabac soit, à nouveau, sensiblement de 100°C au bout de 5 minutes.

La mise en oeuvre du procédé connu est donc longue et fastidieuse, pour les raisons suivantes :
- nécessité d'ajuster, par pesage, la masse de tabac utilisé dans chaque essai à 10 grammes,
- nécessité de commander, par tâtonnements et réglages au cours d'essais préparatoires, le flux d'air chaud,
- nécessité de retoucher souvent ces réglages entre les essais, et
- nécessité de procéder à des corrections à déterminer à l'aide d'une table.

De plus, la nécessité d'utiliser une masse de tabac déterminée et égale à 10 grammes, pose des problèmes de volume pour du tabac expansé par exemple. En effet, le volume d'une masse de 10 grammes de tabac expansé est beaucoup plus important que le volume de 10 grammes de tabac normal, ce qui peut poser des problèmes pratiques lors de la mise en oeuvre du procédé.

La présente invention vis à pallier ces inconvénients.

A cet effet, elle a pour objet un procédé du type défini ci-dessus caractérisé par le fait que, au cours de la dessication, on mesure la température de l'air après passage dans la masse de tabac, on compare la température mesurée à une valeur de consigne qui suit une loi déterminée en fonction du temps, et on commande le flux d'air chaud en réponse au résultat de la comparaison, pour que la température de l'air, après passage dans la masse du tabac, suive ladite loi déterminée.

Dans le procédé de l'invention, la commande permanente du flux d'air chaud, que l'on s'interdisait dans l'art antérieur, permet le contrôle permanent de la température de l'air après passage dans la masse de tabac, afin de lui faire suivre une évolution déterminée.

Ainsi, on est certain d'atteindre une température déterminée au bout d'un temps déterminé, quelle que soit l'humidité ou la masse de tabac utilisée, sans tâtonnements et réglages au cours d'essais préparatoires. De plus, comme on est certain d'atteindre une température déterminée au bout d'un temps déterminé, il n'est plus nécessaire d'effectuer des corrections sur les résultats de teneur en eau.

Par ailleurs, la durée de chaque opération de dessication, dans le procédé de l'art antérieur, était pratiquement fixée à 5 minutes, tout au moins pour les mesures relativement précises. En principe, il aurait certainement été possible de réduire ce temps en chauffant davantage le tabac, mais la nécessité d'établir empiriquement de nouveaux tableaux de corrections rendait cette éventualité très fastidieuse et quasiment impossible à envisager.

La mise en oeuvre du procédé de l'invention est assez simple pour permettre la mise au point de processus de dessication d'une durée inférieure à 5 minutes.

Dans la mise en oeuvre préférée du procédé de l'invention, la loi déterminée de variation de la température en fonction du temps est telle que la température tend sensiblement asymptotiquement vers une température constante.

La présente invention a également pour objet un appareil permettant la mise en oeuvre automatique du procédé de l'invention.

A cet effet, la présente invention concerne donc également un appareil de dessication contrôlée d'une masse d'un échantillon de tabac pour mesure de sa teneur en eau, comprenant des moyens commandables de production d'un flux d'air chaud et des moyens pour soumettre ladite masse de tabac audit flux d'air chaud caractérisé par le fait qu'il comprend :

- des moyens de mesure de la température de l'air après passage dans la masse de tabac,
- des moyens de génération d'un signal de consigne suivant une loi prédéterminée en fonction du temps,
- des moyens de comparaison de la valeur de la température mesurée et de la valeur du signal de consigne, et,
- des moyens de traitement, reliés à la sortie desdits moyens de comparaison pour commander lesdits moyens de production afin que la température de l'air, après passage dans la masse du tabac, suive ladite loi déterminée.

Avec l'appareil de l'invention, la température de l'air après passage dans la masse de tabac suit automatiquement une évolution déterminée.

L'invention sera mieux comprise à l'aide de la description suivante de la forme de réalisation préférée de l'appareil de l'invention, ainsi que de la mise en oeuvre préférée du procédé de l'invention, faite en référence au dessin annexé, sur lequel :

- la figure 1 représente un schéma d'un appareil selon l'invention,
- la figure 2 représente un schéma du circuit électronique de commande de l'appareil de la figure 1, et,
- la figure 3 représente les variations de la température de consigne et de la température mesurée dans l'appareil de la figure 1.

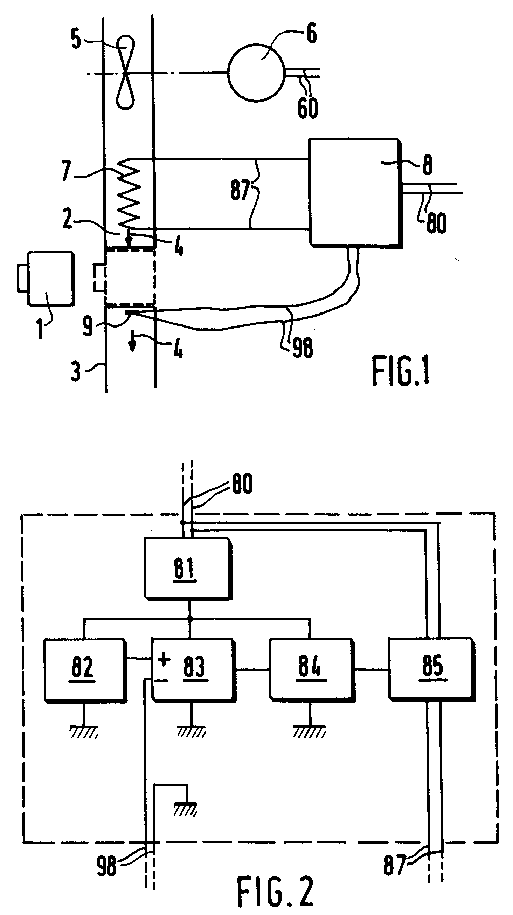

En référence à la figure 1, un appareil pour dessication contrôlée d'une masse d'un échantillon de tabac dont on désire mesurer la teneur en eau comprend un ventilateur 5, entraîné par un moteur 6, agencé pour produire un flux d'air 4 dans un conduit d'arrivée d'air 2.

A l'intérieur du conduit d'arrivée d'air 2 est montée une résistance électrique 7.

A l'extrémité du conduit d'arrivée d'air peut être installée, comme cela est représenté en traits pointillés sur la figure 1, une coupelle 1, dont le fond, réalisé dans un tamis métallique, coïncide avec l'entrée d'un conduit d'évacuation d'air 3.

Un capteur de température 9, à sortie électrique, est disposé dans le conduit d'évacuation 3 de façon à ce que sa partie sensible se trouve juste sous le tamis de la coupelle 1.

Un circuit électronique 8, de commande, est relié par une connexion 98, à deux fils, au capteur 9 et par une connexion 87, à deux fils, à la résistance 7.

Le moteur électrique 6 et le circuit électronique 8 de commande sont alimentés en énergie électrique grâce à des connexions à deux fils 60 et 80, respectivement, par des moyens d'alimentation en énergie électrique non représentés car classiques.

Le circuit électronique 8 de commande comprend un circuit d'alimentation 81 de type connu, agencé pour délivrer à un générateur de fonction 82, un circuit de soustraction 83 et un circuit de traitement 84, les courants d'alimentation nécessaires à leur fonctionnement, sous une tension constante.

Le générateur de fonctions 82, de type connu à diodes, est relié à une première entrée du circuit 83 de soustraction, de type connu à amplificateur opérationnel, dont l'autre entrée est reliée à un des fils de la connexion 98, l'autre fil étant à la masse.

Le circuit de traitement 84 est agencé pour délivrer des impulsions de niveau constant et dont la largeur est commandée par la tension appliquée à son entrée, ici reliée à la sortie du soustracteur. Il comprend à cet effet, et de manière non représentée car classique, un monostable déclenché par une horloge et dont la durée de l'état instable est commandée par la tension appliquée à l'entrée du circuit de traitement 84.

La sortie du circuit de traitement 84 commande un circuit de commutation 85 à thyristors, interposé entre la connexion 80 et la connexion 87.

L'ensemble qui vient d'être décrit fonctionne comme suit.

Une masse d'un échantillon du tabac est placée dans la coupelle 1. Celle-ci est mise en place de façon à ce que la masse de tabac soit soumise au flux d'air 4 produit par le ventilateur 5, auquel peut être transférée de l'énergie calorifique par la résistance chauffante 7, lorsque celle-ci est parcourue par un courant.

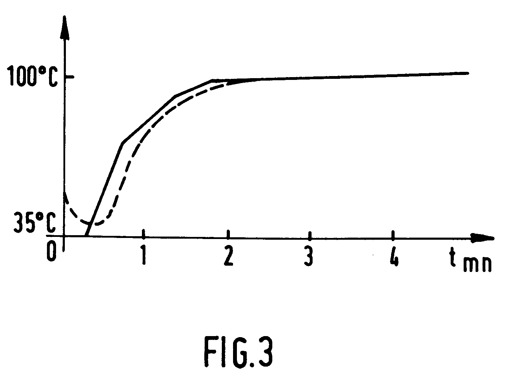

Le capteur 9 mesure en permanence la température de l'air après passage dans la masse de tabac, et délivre au circuit de soustraction 83 une tension proportionnelle à cette température. Le circuit de soustraction 83 compare à tout instant cette tension à la tension de sortie du générateur de fonction 82. Cette tension de sortie varie en fonction du temps en suivant une loi déterminée du type de celle représentée en trait plein sur la figure 3. Pour plus de clarté, la figure 3 représente en trait plein une loi qui correspond à la température de "consigne" correspondante, c'est-à-dire celle qui devrait être mesurée à tout instant par le capteur 9 pour que sa tension de sortie soit égale à la tension de sortie du générateur de fonction 82.

Si la température mesurée est supérieure à la température de consigne, la sortie du circuit de soustraction 83 est négative, et cela a pour conséquence une réduction de la durée des impulsions en sortie du circuit de traitement 84 donc du temps de passage du courant dans la résistance 7, et donc de la quantité d'énergie calorifique transférée. Le flux d'air 4 se refroidit.

Naturellement, il serait commandé pour se réchauffer si la température mesurée était inférieure à la température de consigne. A titre d'exemple, la figure 3 représente, en traits pointillés, l'évolution de la température mesurée lors d'un essai. Les différences entre la température de consigne et la température mesurée sont imputables aux imperfections de l'appareil. Ainsi la partie en forme de vallée au début de la courbe de la température mesurée traduit le fait que l'appareil n'était pas assez froid lorsque l'essai a été commencé.

Il est apparu toutefois que ce phénomène était sans grande influence sur la précision du résultat final obtenu, ce qui, dans la pratique, permet d'enchaîner les essais les uns après les autres sans avoir à attendre trop longtemps le refroidissement de l'appareil.

Dans le même souci de rapidité, une série d'essais a été menée pour permettre d'opérer avec un temps de dessication inférieur à 5 minutes. Il est apparu qu'une loi du type de celle de la figure 3, mais passant par la valeur 103° C au bout de 3 minutes permet d'obtenir des mesures précises de la teneur en eau de l'échantillon.

Comme cela a déjà été signalé, un gain de temps appréciable est obtenu du fait qu'il n'est plus nécessaire d'ajuster, par pesage, la masse de tabac à une valeur déterminée, à savoir 10 grammes. Il suffit de connaître cette masse avant et après dessication pour pouvoir calculer la teneur en eau puisque le processus de dessication a été constamment contrôlé, quelle que soit la valeur de la masse de tabac en essai.

On peut remplacer la commande de la quantité d'énergie calorifique transférée au flux d'air produit par le ventilateur, c'est-à-dire ici la commande du courant parcourant la résistance 7, par une commande de la vitesse de rotation du moteur 6 du ventilateur 5, c'est-à-dire par une commande du débit du flux d'air, le courant parcourant la résistance 7 restant constant.

On peut remplacer, par exemple, le générateur de fonction 82, le circuit de soustraction 83 et le circuit de traitement 84 par un système à microprocesseur.

De même, la loi de variation de la température de consigne représentée sur la figure 1 n'est donnée qu'à titre d'exemple, et tout autre type de loi peut être expérimenté.

## Revendications

1. Procédé de dessication contrôlée d'une masse d'un échantillon de tabac, en vue de la mesure de sa teneur en eau, dans lequel on commande un flux d'air chaud, auquel on soumet ladite masse de tabac, de telle façon que la température de l'air, après passage dans la masse de tabac, soit égale à une valeur déterminée au bout d'un temps déterminé, procédé caractérisé par le fait que, au cours de la dessication, on mesure la température de l'air après passage dans la masse de tabac, on compare la température mesurée à une valeur de consigne qui suit une loi déterminée en fonction du temps, et on commande le flux d'air chaud en réponse au résultat de la comparaison, pour que la température de l'air, après passage dans la masse du tabac, suive ladite loi déterminée.

2. Procédé selon la revendication 1, dans lequel ladite loi déterminée en fonction du temps est telle que la température tend sensiblement asymptotiquement vers une température constante.

3. Procédé selon l'une des revendications 1 et 2 dans lequel on commande le flux d'air chaud en commandant la quantité d'énergie calorifique que l'on transfère à un flux d'air de débit constant.

4. Procédé selon l'une des revendications 1 et 2 dans lequel on commande le flux d'air chaud en commandant le débit d'un flux d'air auquel on transfère une quantité constante d'énergie calorifique.

5. Appareil de dessication contrôlée d'une masse d'un échantillon de tabac pour mesure de sa teneur en eau, comprenant des moyens commandables de production (5,6,7) d'un flux d'air chaud (4) et des moyens (1,2,3) pour soumettre ladite masse de tabac audit flux d'air chaud (4) caractérisé par le fait qu'il comprend :

- des moyens de mesure (9) de la température de l'air après passage dans la masse de tabac,
- des moyens de génération (82) d'un signal de consigne suivant une loi prédéterminée en fonction du temps,
- des moyens de comparaison (83) de la valeur de la température mesurée et de la valeur du signal de consigne, et,
- des moyens de traitement (84), reliés à la sortie desdits moyens de comparaison (83) pour commander lesdits moyens de production (5,6,7) afin que la température de l'air, après passage dans la masse du tabac, suive ladite loi déterminée.

6. Appareil selon la revendication 5 dans lequel lesdits moyens de génération d'un signal de consigne comprennent un générateur de fonctions (82).

**Claims**

1. Method for the controlled drying of a mass of a tobacco sample, with a view to the measurement of its water content, in which one controls a flow of hot air, to which said mass of tobacco is subjected, in such a way that the temperature of the air, after passing through the mass of tobacco, is equal to a predetermined value at the end of a predetermined time, a method characterised by the fact that, during drying, the temperature of the air is measured after passing through the mass of tobacco, the temperature measured is compared with a reference value which follows a law predetermined as a function of time and the flow of hot air is controlled in response to the result of the comparison, in order that the temperature of the air, after passing through the mass of tobacco, follows said predetermined law.

2. Method according to Claim 1, in which said law predetermined as a function of time is such that the temperature tends substantially asymptotically towards a constant temperature.

3. Method according to one of Claims 1 and 2 in which one controls the flow of hot air by controlling the quantity of thermal energy which is transferred to a flow of air of constant rate.

4. Method according to one of Claims 1 and 2 in which one controls the flow of hot air by controlling the rate of a flow of air to which a constant quantity of thermal energy is transferred.

5. Apparatus for the controlled drying of a mass of a tobacco sample for measuring its water content, comprising controllable means (5, 6, 7) for the production of a flow of hot air (4) and means (1, 2, 3) for subjecting said mass of tobacco to said flow of hot air (4) characterised by the fact that it comprises:

- means (9) for measuring the temperature of the air after passing through the mass of tobacco,
- means (82) for generating a reference signal according to a law predetermined as a function of time,
- means (83) for comparing the value of the measured temperature and the value of the reference signal, and,
- processing means (84) connected to the output of said comparison means (83) for controlling said production means (5, 6, 7) in order that the temperature of the air, after passing through the mass of tobacco, follows said predetermined law.

6. Apparatus according to Claim 5, in which said means for generating a reference signal comprise a function generator (82).

**Patentansprüche**

1. Verfahren zur kontrollierten Trocknung einer Menge einer Tabakprobe hinsichtlich der Messung ihres Wassergehalts, bei dem ein heißer Luftstrom, dem man die besagte Tabakmenge aussetzt, derart gesteuert wird, daß nach Ablauf einer bestimmten Zeit die Temperatur der Luft nach Durchströmen der Tabakmenge einem bestimmten Wert entspricht, Verfahren, dadurch gekennzeichnet daß man während der Trocknung die Temperatur der Luft, nachdem diese die Tabakmenge durchströmt hat, mißt, man die gemessene Temperatur mit einem Sollwert vergleicht, der einem festgelegten zeitabhängigen Verlauf folgt, und man den heißen Luftstrom in Antwort auf das Ergebnis des Vergleichs so regelt, daß die Temperatur der Luft nach Durchströmen der Tabakmenge diesem bestimmten Verlauf folgt.

2.  Verfahren nach Anspruch 1, bei dem der besagte bestimmte zeitabhängige Verlauf derart ist, daß die Temperatur im wesentlichen asymptotisch einer konstanten Temperatur zustrebt.

3.  Verfahren nach einem der Ansprüche 1 und 2, bei dem man den heißen Luftstrom regelt, indem man die Menge der Wärmeenergie steuert, die man auf einen Luftstrom konstanter Stärke überträgt.

4.  Verfahren nach einem der Ansprüche 1 und 2, bei dem man den heißen Luftstrom regelt, indem man die Stärke eines Luftstroms steuert, auf den man eine konstante Menge an Wärmeenergie überträgt.

5.  Vorrichtung zur kontrollierten Trocknung einer Menge einer Tabakprobe zur Messung ihres Wassergehalts, die steuerbare Mittel zur Erzeugung (5, 6, 7) eines heißen Luftstroms (4) umfaßt sowie Mittel (1, 2, 3), die dazu dienen, die besagte Tabakmenge dem heißen Luftstrom (4) auszusetzen, Vorrichtung, dadurch gekennzeichnet, daß sie umfaßt:
    -   Mittel zur Messung (9) der Temperatur der Luft nach dem Durchströmen der Tabakmenge,
    -   Mittel zur Generierung (82) eines Sollwertsignals entsprechend einem vorher festgelegten zeitabhängigen Verlauf,
    -   Mittel zum Vergleichen (83) des gemessenen Temperaturwerts mit dem Sollwertsignal, und
    -   Mittel zur Verarbeitung (84), die mit dem Ausgang der besagten Mittel zum Vergleichen (83) verbunden sind, um die besagten Mittel zur Erzeugung (5, 6, 7) so zu steuern, daß die Temperatur der Luft nach dem Durchströmen der Tabakmenge dem besagten festgelegten Verlauf folgt.

6.  Vorrichtung nach Anspruch 5, bei der die besagten Mittel zur Generierung eines Sollwertsignals einen Funktionsgeber (82) umfassen.

FIG.1

FIG.2

FIG.3